# DEMANDE DE BREVET EUROPEEN

(11) **EP 1 481 836 A1**
(43) Date de publication de la demande: **01.12.2004**
(21) Numéro de dépôt: 04300306.0
(22) Date de dépôt: 28.05.2004
(51) Int. Cl.: B60K 26/02, G05G 1/14

(54) **Système et procédé de génération de force de rappel pour pédale de véhicule**

(30) Priorité: 28.05.2003 FR 0350194
(71) Demandeur: Renault s.a.s., 92100 Boulogne Billancourt (FR)
(72) Inventeur: Salesse, Laurent, 91470 Les Molieres (FR)

(57) **Abrégé**

Le système pour générer une force sur une pédale (2) de commande d'un organe de réglage d'un moteur thermique de véhicule automobile comprend un moteur électrique tournant resp. linéaire délivrant un couple resp. force de sortie à un mécanisme de transmission (22) qui relie le moteur électrique (16) à l'organe de réglage pour exercer une force resp. couple, notamment de rappel, sur cet organe; une unité de pilotage (10) qui génère le courant d'alimentation du moteur (16) et qui reçoit des informations pour asservir le moteur électrique (16) en fonction de la force à exercer sur la pédale. La force exercée sur la pédale (2) est égale, à un facteur de proportionnalité près, au couple resp. force de sortie du moteur électrique. Le type de moteur utilisé est adapté, à travers le système de pilotage de son alimentation électrique, à faire varier la valeur de la force exercée sur la pédale indépendamment de la position de la pédale.

## Description

La présente invention concerne un système pour générer une force sur une pédale de commande d'un organe de réglage de la puissance délivrée a un véhicule automobile. En particulière, la présente invention concerne une force de rappel sur une pédale de réglage de la puissance délivrée par un moteur thermique (ou équivalent) du véhicule, comme une pédale d'accélérateur.

Les moteurs des véhicules automobiles sont équipés d'un organe de réglage qui permet de contrôler leur puissance, généralement un volet papillon ou une pompe à injection. Cet organe de réglage est commandé par le conducteur au moyen d'une pédale appelée pédale d'accélérateur. Un ressort de rappel pousse la pédale d'accélérateur en position de ralenti lorsque le conducteur n'exerce aucune pression sur elle.

On connaît des systèmes pour générer une force de rappel sur la pédale d'accélérateur afin, notamment, de lui transmettre une information ou pour l'aider à respecter une limite de vitesse.

Le brevet WO 00/56 566 décrit un système de régulation de la vitesse d'un véhicule qui comprend une unité de contrôle reliée à la pédale d'accélérateur. Cette unité peut passer d'une position dans laquelle la pédale d'accélérateur peut être actionnée sans difficulté et une position dans laquelle elle est difficile à actionner parce qu'une force de résistance générée par l'unité de contrôle doit être surmontée.

Le brevet WO 93/12 949 décrit un dispositif d'assistance au contrôle de la puissance d'un moteur de véhicule qui comprend une unité électronique de contrôle. Un servomoteur commandé par l'unité électronique déplace une biellette de manière à faire varier l'angle entre cette biellette et un ressort de rappel. La force de rappel exercée par le ressort est fonction de l'écart entre la vitesse réelle du véhicule automobile et la consigne de vitesse limite. Elle peut également être déterminée par une exigence de sécurité. Le dispositif décrit dans ce brevet ne permet d'appliquer qu'une force de rappel unidirectionnelle qui vient s'ajouter à la force de rappel nominale exercée par une pédale.

Toutefois, ces dispositifs actuellement connus présentent plusieurs inconvénients. Ils sont basés sur des mécanismes mécaniques utilisant des ressorts ou des vérins. Outre leur complexité, leur coût de fabrication peut être élevé. Ils ne permettent ni de doser la force avec précision ni de la faire varier avec un faible temps de réaction. La présence du ressort dans la chaîne cinématique limite ou perturbe la restitution de forces variables dans le temps en introduisant des phénomènes transitoires. De plus, ils ne s'appliquent pas aux pédales d'accélérateur dont le déplacement est mesuré électriquement et qui sont aujourd'hui de plus en plus utilisées dans les véhicules modernes.

Le brevet US 4,516,063 décrit un dispositif de contrôle de la force de résistance de la pédale au cours de son déplacement. La variation de la force de résistance est obtenue par un dispositif utilisant un moteur électrique de type pas à pas.

Ce principe de réalisation permet d'obtenir un effet de crans distribués périodiquement sur toute la course de la pédale. Ces crans n'appliquent pas de force de rappel mais une résistance rencontrée à des points fixes le long de la course de la pédale. Le nombre et le distribution de ces crans sont figés car dépendants du nombre de pôles du moteur pas à pas.

Dans certain cas l'effet de crans créé par le système pourrait être interprété par l'utilisateur comme un défaut. Par exemple comme un défaut dans le mécanisme de l'accélérateur venant perturber sa course.

La présente invention a pour objet un système amélioré pour générer une force sur une pédale de commande d'un organe de réglage de la puissance délivrée au véhicule automobile.

La présente invention fournit un système pour générer une force de rappel sur une pédale de commande d'un organe de réglage de la puissance délivrée par un moteur thermique, ou équivalent, de véhicule automobile, le système comprenant un moteur électrique pour délivrer une force en sortie d'un mécanisme de transmission relié au moteur électrique et à l'organe de réglage du moteur thermique pour exercer une force sur cet organe; une unité de pilotage qui contrôle le signal électrique d'alimentation du moteur, par exemple en générant un courant, et qui reçoit des informations pour asservir le moteur électrique en fonction de la force à exercer sur la pédale de commande de l'organe de réglage de la puissance délivrée par le moteur thermique, la force exercée sur la pédale étant égale, à un facteur de proportionnalité près, à la sortie du moteur électrique, caractérisé en ce que le type de moteur électrique utilisé est adapté, à travers le système de pilotage de son alimentation électrique, à faire varier la valeur de la force exercée sur la pédale indépendamment de la position de la pédale.

La génération d'une force de rappel qui est indépendante de la position de la pédale permet d'obtenir une grande diversité d'applications automobiles. Par exemple, la force de rappel permettrai de réaliser une application destinée à informer le conducteur sur sa vitesse ou son inter distance par rapport au véhicule qui le précède. En utilisant une action continue et progressive on minimise le risque d'interprétation erronée du conducteur, se qui pourrait par exemple apparaître dans le cas de système générant un ressenti du type "crans", le système permettrait néanmoins de générer un tel ressenti tout en autorisant une disposition et une amplitude et un nombre de crans aléatoire sur la totalité de la course de la pédale.

Le moteur électrique tournant peut être un moteur électrique tournant et le mécanisme de transmission peut transformer le couple du moteur tournant en une force proportionnelle au couple de sortie dudit moteur électrique.

Le couple de sortie du moteur électrique tournant peut être piloté par sa tension ou son courant d'alimentation qui est généré ou régulé par l'unité de pilotage.

Le moteur électrique tournant peut être asservi en position par l'unité de pilotage.

Le moteur électrique tournant peut être du type courant continu ou asynchrone ou synchrone ou sans balais ("brushless").

Le moteur électrique tournant peut être relié à la pédale à travers un système de transmission comportant un réducteur tournant et une ou plusieurs biellettes, de préférence le réducteur tournant comportant un jeu d'engrenages ou un ensemble poulie-courroie.

Le moteur électrique peut être un moteur linéaire, de préférence du type sans balais ("brushless").

Le moteur peut être apte à générer une force permettant de maintenir une position constante de la pédale.

Un effort supérieur à la force exercée par le système pour le maintien de la pédale en position constante peut fournir à l'unité de pilotage un signal qui désactive l'application de la force sur la pédale.

Le système peut comporter un capteur de mesure de la position de la pédale qui fournit à l'unité de pilotage un signal représentatif de cette position.

Le système peut aussi générer une force d'effacement sur ladite pédale à partir du même moteur.

La présente invention fourni aussi un procédé pour générer une force de rappel ou d'effacement sur une pédale de commande d'un organe de réglage de la puissance délivrée à un véhicule automobile, la puissance étant par exemple délivrée par un moteur thermique, le procédé incluant les étapes suivantes:
a) on génère ladite force à l'aide d'un moteur électrique;
b) on contrôle le signal électrique d'alimentation du moteur, par exemple en générant un courant;
c) on exerce la force sur la pédale avec un facteur de proportionnalité par rapport à la force exercée à la sortie du moteur; et le procédé étant caractérisé en ce qu'on utilise un type de moteur électrique adapté, à travers le système de pilotage de son alimentation électrique, à faire varier la valeur de la force exercée sur la pédale indépendamment de la position de la pédale.

La force exercée sur la pédale est égale, à un facteur de proportionnalité près, au couple de sortie du moteur tournant ou à la force de sortie du moteur linéaire.

En effet, le mécanisme de transmission est constitué exclusivement de biellettes, à l'exclusion de ressorts ou autres moyens élastiques. L'effort du moteur (son couple ou sa force de sortie) est donc transmis instantanément, avec la même intensité (à un facteur multiplicatif près), à la pédale de commande. On peut donc, selon l'invention, exercer une force, notamment de rappel complètement réglable puisqu'elle ne dépend que de la sortie du moteur électrique, laquelle peut être programmée selon une loi choisie: variation continue, cran, point dur, rampe régulière, etc.

La force exercée sur la pédale est le plus souvent une force de rappel qui la sollicite vers sa position relâchée. Mais ce peut être également une force de sens inverse, qui tend à l'enfoncer davantage, par exemple lorsqu'il s'agit de la maintenir dans une position déterminée. Par ailleurs, le terme "force" doit être compris comme signifiant également "couple". En effet, en pratique, le système agit sur une biellette solidaire de l'axe de la pédale, ce qui se traduit par un couple, par exemple un couple de rappel, exercé sur cette pédale.

Lorsque le moteur électrique est un moteur tournant, le mécanisme de transmission transforme son couple en une force proportionnelle à son couple de sortie.

Avantageusement, le couple de sortie du moteur électrique est piloté par sa tension ou son courant d'alimentation qui sont générés par l'unité de pilotage. Le moteur électrique tournant peut également être asservi en position par l'unité de pilotage.

Le système est apte à générer une force permettant de maintenir une position constante de la pédale. Dans ce cas, un effort supérieur à la force exercée par le système pour le maintien de la pédale en position constante fournit à l'unité de pilotage un signal qui désactive l'application de la force sur la pédale.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue schématique d'un premier mode de réalisation de l'invention comportant un moteur électrique linéaire ;
- la figure 2 est une vue schématique d'un second mode de réalisation de l'invention comportant un moteur électrique tournant ;

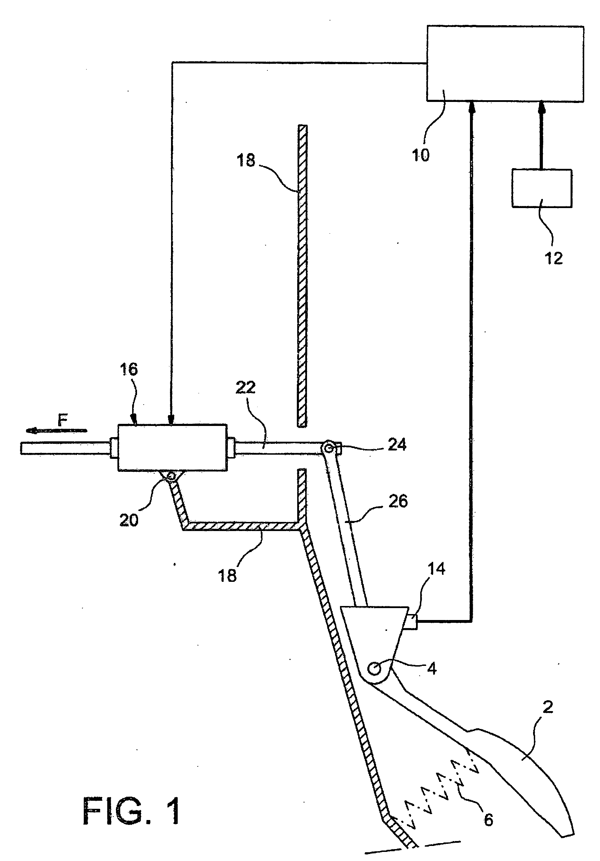

Sur la figure 1, la référence 2 désigne une pédale de commande d'un organe de réglage de la puissance du moteur thermique du véhicule sur lequel le système d'aide à la conduite de l'invention est monté. Cet organe de réglage peut être un papillon de réglage de l'admission d'air dans les chambres du moteur thermique ou une pompe d'injection de carburant. La pédale 2, aussi appelée pédale d'accélérateur, est montée pivotante sur le véhicule automobile autour d'un axe 4. Un ressort de rappel 6, schématiquement représenté, rappelle la pédale dans sa position de repos.

Le système comprend par ailleurs une unité de pilotage électronique 10. Cette unité peut être spécifique au système de l'invention ou être une unité déjà présente sur le véhicule automobile. L'unité de pilotage 10 reçoit des informations sur le véhicule automobile et sur son environnement d'un ensemble de capteurs 12, par exemple la vitesse du véhicule ou la distance séparant le véhicule automobile d'un autre véhicule automobile qui le précède. L'unité de pilotage 10 reçoit également du capteur 14 un signal de position de la pédale d'accélérateur 2. Le signal de position de la pédale d'accélérateur peut être utilisé pour piloter également l'organe de réglage de la puissance du moteur thermique du véhicule automobile. Ou bien, l'organe de réglage peut être commandé classiquement par un câble.

Enfin, le système peut comprendre un moteur électrique linéaire 16 dont le stator est articulé sur le tablier 18 du véhicule automobile par l'intermédiaire d'une rotule ou d'un pivot 20. Le moteur linéaire comporte une tige 22 (le "rotor") articulée à l'extrémité 24 d'une biellette 26 solidaire de la pédale d'accélérateur 2. Une traction exercée sur la tige 22 dans le sens de la flèche F permet de créer une force positive de rappel sur la pédale qui s'ajoute à la force de rappel, toujours présente, du ressort de rappel 6. La direction de la force F peut être inversée pour venir se soustraire à la force de rappel exercée par le ressort 6, le signe de la force ainsi créée est alors négatif. Par convention on indiquera le sens d'application de la force F à travers le signe positif ou négatif pour indiquer respectivement une force de rappel ou une force d'effacement.

L'unité de pilotage 10 permet d'asservir les déplacements de la tige 22 en fonction des signaux reçus. Une relation simple existe en effet entre le signal d'alimentation du moteur électrique 16 et la force de rappel additionnelle créée sur la pédale 2. Cette relation simple permet de piloter la force de rappel à travers l'unité de pilotage électronique 10 et autorise donc une très grande diversité de lois de force de rappel. Le système permet d'obtenir des temps de réaction courts et une bonne précision sur la valeur de la force de rappel. En outre, comme on l'a rappelé, elle est compatible avec les pédales d'accélérateur sans câble, de plus en plus utilisées actuellement.

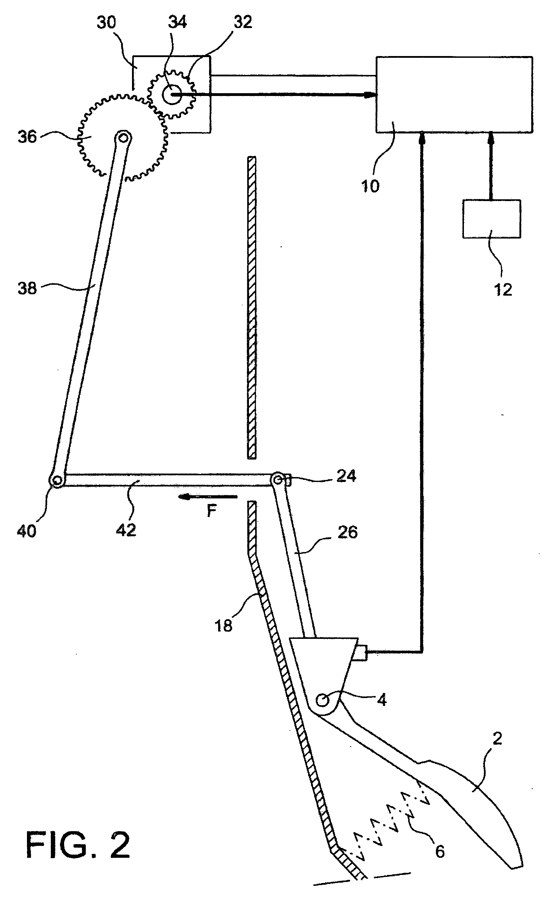

On a représenté sur la figure 2 un second mode de réalisation d'un système pour générer une force de rappel sur une pédale 2 de commande d'un organe de réglage de moteur thermique de véhicule automobile.

Ce système comprend, comme le précédent, une unité électronique 10 qui reçoit des informations sur le véhicule automobile et sur son environnement d'un capteur 12, par exemple la vitesse du véhicule ou la distance séparant le véhicule automobile d'un autre véhicule automobile qui le précède et également un signal de position de la pédale d'accélérateur 2 émis par le capteur 14.

Le système comprend un moteur électrique tournant 30. Un pignon menant 32 est monté sur l'arbre de sortie du moteur électrique 30 et un capteur 34 de la position angulaire de cet arbre de sortie est solidaire du pignon 32. Une forme équivalente de transmission du mouvement et de la force, telle que un ensemble poulie-courroie, pourrait être utilisés.

Le capteur 34 envoie un signal de position angulaire à l'unité de pilotage électronique 10. Un pignon mené 36 est entraîné par le pignon menant. Une biellette 38 est fixée au pignon mené 36. Son extrémité 40 est fixée à une biellette intermédiaire 42 dont la seconde extrémité 24 est articulée sur une biellette 26 solidaire de la pédale d'accélérateur 2.

Une traction exercée sur la tige 22 dans le sens de la flèche F permet de créer une force de rappel sur la pédale. Cette force de rappel s'ajoute à la force de rappel, toujours présente, du ressort de rappel 6. De manière similaire au premier mode de réalisation présenté, la direction de la force F peut être inversée pour venir se soustraire à la force de rappel exercée par le ressort 6, le signe de la force ainsi créée est alors négatif. Par convention on indiquera le sens d'application de la force F à travers le signe positif ou négatif pour indiquer respectivement une force de rappel ou une force d'effacement.

Pour la présente invention dans tous ses modes de réalisation, le moteur électrique est piloté de telle sorte que la valeur de la force exercée sur la pédale peut être indépendante de la position de la pédale.

Comme indiqué dans l'exemple du deuxième mode de réalisation, le moteur peut être un moteur à courant continu. Le moteur électrique 30 peut également être un moteur à courant alternatif. Quel que soit le cas, le moteur peut être piloté de manière à délivrer un couple voulu permettant d'exercer une force F positive ou négative d'intensité voulue. Le choix du mode de pilotage et du type de moteur permet d'obtenir une valeur de force exercée qui peut alors être indépendante de la position de la pédale.

Si le moteur électrique est de type courant continu et qu'il est piloté en courant, une relation de proportionnalité existe entre la valeur du courant d'alimentation du moteur électrique 30 et la force de rappel additionnelle créée sur la pédale 2. Si le moteur est un moteur à courant alternatif, il peut également être commandé de manière à délivrer un couple voulu.

Le système de l'invention permet, de manière générale, de communiquer une information au conducteur du véhicule automobile de manière à l'assister dans sa conduite. De nombreuses applications sont possibles.

Le système peut aider à maintenir une distance de sécurité entre un véhicule automobile et celui qui le précède. Dans cette application, un dispositif, généralement un télémètre, permet de mesurer la distance entre les deux véhicules. Cette information est transmise à l'unité de pilotage 10 dans laquelle on a implémenté, de préférence sous forme logicielle, un modèle mathématique qui calcule une force de rappel à exercer sur la pédale 2. Plus la distance avec le véhicule automobile qui précède diminue, plus la force de rappel augmente selon une loi proportionnelle ou autre, ce qui incite le conducteur à ralentir pour augmenter cette distance.

Le système peut également aider au respect d'une consommation de carburant. Pour cela, on modélise un mode de consommation économique, notamment en fonction du régime moteur. L'unité de pilotage 10 reçoit des informations sur le fonctionnement du moteur (régime). Lorsque le conducteur s'écarte du mode de consommation économique, la force de rappel sur la pédale d'accélérateur augmente.

Le système de l'invention peut également servir de limiteur de vitesse. Un capteur de vitesse renseigne l'unité de pilotage 10 sur la vitesse du véhicule automobile. Lorsque le véhicule automobile la dépasse, la pédale 2 se durcit, ce qui incite le conducteur à ralentir.

Le moteur électrique tournant 30 peut également être asservi en position. Le capteur de position 34 informe l'unité de pilotage 10 sur la position du pignon menant 32 et, par suite, sur la position de la pédale 2 à laquelle il est relié. Le moteur électrique tourne jusqu'à atteindre une orientation angulaire voulue, puis maintient cette position par une forte augmentation de son couple de sortie. Il faut alors appuyer fortement sur la pédale 2 pour la faire sortir de cette position. On crée ainsi un cran ou point dur artificiel. Le conducteur peut alors reposer son pied sur la pédale sans avoir à faire l'effort de retenir son pied pour ne pas enfoncer l'accélérateur. Un avantage du système est qu'il permet de programmer aisément un tel point dur à un emplacement quelconque de la course de la pédale alors que, dans un dispositif mécanique, le cran est généralement en bout de course de la pédale. On peut également, selon l'invention, asservir le moteur linéaire 16 en position.

La présente invention permet de générer une force F appliquée qui n'est pas limitée à des positions de pédales prédéterminées. En plus la fonction "point dur" peut également être réalisée pour permettre un débrayage du système d'assistance. Si le conducteur veut reprendre la main pour revenir à un mode de conduite manuelle, il enfonce fortement la pédale au-delà du point dur (kick down), ce qui transmet un signal à l'unité de pilotage 10 qui interrompt la force de rappel sur la pédale 2.

La génération d'une force de rappel qui est indépendante de la position de la pédale permet d'obtenir une grande diversité d'applications automobiles. Par exemple, la force de rappel permettrai de réaliser une application destinée à informer le conducteur sur sa vitesse ou son inter distance par rapport au véhicule qui le précède. En utilisant une action continue et progressive on minimise le risque d'interprétation erronée du conducteur, se qui pourrait par exemple apparaître dans le cas de système générant un ressenti du type "crans", le système permettrait néanmoins de générer un tel ressenti tout en autorisant une disposition et une amplitude et un nombre de crans aléatoire sur la totalité de la course de la pédale.

## Revendications

1. Système pour générer une force de rappel sur une pédale de commande d'un organe de réglage de la puissance délivrée par un moteur thermique de véhicule automobile, le système comprenant un moteur électrique (30) pour délivrer une force en sortie d'un mécanisme de transmission relié au moteur électrique (16, 30) et à l'organe de réglage du moteur thermique pour exercer une force sur cet organe; une unité de pilotage (10) qui contrôle le signal électrique d'alimentation du moteur (16, 30), par exemple en générant un courant, et qui reçoit des informations pour asservir le moteur électrique (16, 30) en fonction de la force à exercer sur la pédale de commande de l'organe de réglage de la puissance délivrée par le moteur thermique, la force exercée sur la pédale étant égale, à un facteur de proportionnalité près, à la sortie du moteur électrique, **caractérisé en ce que** le type de moteur électrique utilisé est adapté, à travers le système de pilotage de son alimentation électrique, à faire varier la valeur de la force exercée sur la pédale indépendamment de la position de la pédale.

2. Système selon la revendication 1, **caractérisé en ce que** le moteur électrique est un moteur électrique tournant (30) et **en ce que** le mécanisme de transmission transforme le couple du moteur tournant en une force proportionnelle au couple de sortie dudit moteur électrique.

3. Système selon la revendication 2, **caractérisé en ce que** le couple de sortie du moteur électrique est piloté par sa tension ou son courant d'alimentation qui est généré ou régulé par l'unité de pilotage (10).

4. Système selon l'une des revendications 2 à 3, **caractérisé en ce que** le moteur électrique tournant (30) est asservi en position par l'unité de pilotage.

5. Système selon l'une des revendications 2 à 4, **caractérisé en ce que** le moteur est du type courant continu ou asynchrone ou synchrone ou sans balais ("brushless").

6. Système selon l'une des revendications 2 à 5, **caractérisé en ce que** le moteur est relié à la pédale à travers un système de transmission comportant un réducteur tournant et une ou plusieurs biellettes, de préférence le réducteur tournant comportant un jeu d'engrenages ou un ensemble poulie-courroie.

7. Système selon la revendication 1, **caractérisé en ce que** le moteur électrique est un moteur linéaire (16), de préférence du type sans balais.

8. Système selon l'une des revendications 1 à 7, **caractérisé en ce que** le moteur est apte à générer une force permettant de maintenir une position constante de la pédale (2).

9. Système selon la revendication 8, **caractérisé en ce qu'**un effort supérieur à la force exercée par le système pour le maintien de la pédale en position constante fournit à l'unité de pilotage (10) un signal qui désactive l'application de la force sur la pédale (2).

10. Système selon l'une des revendications 1 à 9, **caractérisé en ce qu'**il comporte un capteur (14) de mesure de la position de la pédale (2) qui fournit à l'unité de pilotage un signal représentatif de cette position.

11. Système selon l'une des revendications 1 à 10, **caractérisé en ce que** le système peut aussi générer une force d'effacement sur ladite pédale à partir du même moteur.

12. Procédé pour générer une force de rappel ou d'effacement sur une pédale de commande d'un organe de réglage de la puissance délivrée à un véhicule automobile, la puissance étant par exemple délivrée par un moteur thermique, le procédé incluant les étapes suivantes:
a) on génère ladite force à l'aide d'un moteur électrique;
b) on contrôle le signal électrique d'alimentation du moteur (16, 30), par exemple en générant un courant;
c) on exerce la force sur la pédale avec un facteur de proportionnalité par rapport à la force exercée à la sortie du moteur électrique; et le procédé étant **caractérisé en ce que**
d) on utilise un type de moteur électrique adapté, à travers le système de pilotage de son alimentation électrique, à faire varier la valeur de la force exercée sur la pédale indépendamment de la position de la pédale.
